# EUROPÄISCHE PATENTSCHRIFT

(11) **EP 2 929 205 B1**
(45) Veröffentlichungstag und Bekanntmachung des Hinweises auf die Patenterteilung: **11.01.2017**
(21) Anmeldenummer: 13811409.5
(22) Anmeldetag: 10.12.2013
(51) Int. Cl.: F16D 51/22, B60T 7/20, F16D 65/56

(54) **RADBREMSE**
WHEEL BRAKE
FREIN DE ROUE

(30) Priorität: 10.12.2012 DE 202012104796 U; 29.08.2013 DE 202013103918 U
(43) Veröffentlichungstag der Anmeldung: 14.10.2015
(73) Patentinhaber: Alois Kober GmbH, 89359 Kötz (DE)
(72) Erfinder: ECKLE, Volker, 89183 Holzkirch (DE); FEUSTLE, Wolfgang, 89312 Günzburg (DE); RAMPP, Armin, 86513 Ursberg-Bayersried (DE); TILLMANN, Christian, 89312 Günzburg (DE)
(74) Vertreter: Ernicke, Klaus Stefan
(86) Internationale Anmeldenummer: PCT/EP2013/076038
(87) Internationale Veröffentlichungsnummer: WO 2014/090779

(56) Entgegenhaltungen:
- DE-A1- 2 900 158
- DE-A1-102010 036 705
- DE-U1-202008 006 156
- DE-U1-202011 050 119

## Beschreibung

Die Erfindung betrifft eine Radbremse mit den Merkmalen im Oberbegriff des Hauptanspruchs.

Eine solche Radbremse ist aus der DE 20 2011 050 119 U1 bekannt.

Aus der EP 2 116 737 A2 und der DE 10 2006 007 525 A1 ist jeweils eine andere Radbremse mit einer Zuspanneinrichtung und mit einer automatischen Nachstelleinrichtung bekannt, wobei der Nachstellhebel und das Nachstellrad an der Zuspanneinrichtung angeordnet sind. Der Zuspanneinrichtung gegenüberliegend ist eine Rückfahrautomatik angeordnet.

Die DE 20 2006 004 697 U1 offenbart eine weitere Radbremse, bei der ein Nachstellhebel und ein Nachstellrad an einer der Zuspanneinrichtung gegenüberliegenden Rückfahrautomatik angeordnet sind.

Aus der EP 0 261 660 A1 sind verschiedene Ausführungsformen einer Rückfahrautomatik bekannt, wobei die Radbremse eine Zuspanneinrichtung, aber keine automatische Nachstelleinrichtung aufweist.

Es ist Aufgabe der vorliegenden Erfindung, eine verbesserte Radbremse aufzuzeigen.

Die Erfindung löst diese Aufgabe mit dem Merkmal im Hauptanspruch.
Die beanspruchte Anordnung der Nachstelleinrichtung an einem Stößel und die Abstimmung einer Eingriffslänge (e) und eines Stößelhubs (h) haben der Vorteil einer höheren Betriebssicherheit.

Bevorzugt gehört der Stößel zu einer Rückfahrautomatik mit einer Schwenknocke. Bei der Rückwärtsfahrt kann die Stellnase außer Eingriff vom Nachstellrad, insbesondere einem Zahnrad, kommen. Hierdurch können Toleranzen und evtl. gegenseitige Schrägstellungen der Stellnase und der Bewegungsbahn des Nachstellrades und des im Eingriff befindlichen Zahns kompensiert werden. Ein unerwünschtes Nachstellen bei Rückwärtsfahrt kann dadurch noch zuverlässiger verhindert werden. Diese Funktion kann zusätzlich zu einer Deaktivierbarkeit einer Betätigungseinrichtung für den Nachstellhebel bei Rückwärtsfahrt gegeben sein.

In einer Ausführungsform kann die Hauptebene einer Nasenwand in der Ruhestellung entlang der Achse und der Bewegungsbahn des Nachstellrads ausgerichtet sein, wobei die Vorderkante der Nasenwand schräg zu dieser Achse ausgerichtet ist. Diese Gestaltung und gegenseitige Zuordnung von Stellnase und Nachstellrad hat den Vorteil eines besser definierten gegenseitigen Eingriffs von Stellnase und Nachstellrad und verbessert die Funktionssicherheit der Nachstelleinrichtung. Der schwenkbare Nachstellhebel gleitet bei Betätigung leichter und besser am Umfang des Nachstellrades und am Folgezahn entlang. Eine unerwünschte rückdrehende Mitnahme des Nachstellrades wird zuverlässig verhindert und die Nachstellsicherheit und -funktion verbessert. In Ruhestellung wirkt die Nachstellnase als Anschlag und als Drehsicherung, die ein unerwünschtes Rückdrehen des Nachstellrades verhindert. Hierbei ist es besonders günstig, wenn der Zahnbesatz am Nachstellrad eine sägezahnartige Kontur mit steilen Zahnflanken für die Mitnahme und Nachstellfunktion sowie flacheren Zahnflanken zum Entlanggleiten der Stellnase aufweist. Diese Ausgestaltung hat eigenständige erfinderische Bedeutung und lässt sich bei unterschiedlichen Varianten in der Anordnung und Ausbildung von Nachstelleinrichtungen einsetzen. Dies können auch Nachstelleinrichtungen an der Zuspanneinrichtung sein, wobei eine Rückfahrautomatik in beliebiger Weise ausgestaltet sein kann und eine Schiebebacke, eine Schwenknocke oder dgl. andere Elemente aufweisen kann.

In einer weiteren Ausführungsform hat der Nachstellhebel eine Stützfeder und eine separate Rückstellfeder. Dies verbessert die Funktionssicherheit des Nachstellhebels und seiner Nachstellfunktion. Die Stützfeder hält den Nachstellhebel auf einer Unterlage fest und sichert die vorgegebene Relativlage der Stellnase gegenüber dem Nachstellrad in allen Hebelstellungen. Die Rückstellfeder bewegt den Nachstellhebel bei Beendigung der Bremsbetätigung bzw. bei Beendigung der Rückwärtsfahrt in die Ausgangsstellung zurück und hält ihn in dieser Position. Die Trennung der Federn erlaubt deren jeweils optimierte funktionsgerechte Gestaltung und Anordnung. Die Federgestaltung hat ebenfalls eigenständige erfinderische Bedeutung und lässt sich wie im vorgenannten Fall bei den unterschiedlichsten Ausbildungen und Anordnungen von Nachstelleinrichtungen sowie Rückfahrautomatiken einsetzen.

Eine Ausführungsform der Erfindung sieht eine Notentriegelung bzw. Arretiereinrichtung vor. Dies hat Vorteile für ein Lösen und eine Demontage der Radbremse bei ungünstigen Betriebszuständen, insbesondere bei einer eingelaufenen Bremstrommel und dort in Ruhestellung formschlüssig eintauchenden Bremsbacken. Eine Arretiereinrichtung erlaubt ein Abstecken und Fixieren der Bremsbacken in einer von der Bremstrommel gelösten Stellung. Damit ist auch eine Notentriegelung möglich, um Betriebsstörungen und Fehlfunktionen, insbesondere ein Heißlaufen der Radbremse zu vermeiden oder zu beheben.

Eine Notentriegelung ist auch mittels eines durch eine Öffnung im Bremsträger gesteckten Stift zum Lösen des Eingriffs von Nachstellhebel und Nachstellrad möglich, wobei durch eine ggf. andere Öffnung das Nachstellrad von außen gedreht werden kann. Die Notentriegelung bzw. Arretiereinrichtung hat ebenfalls eigenständige erfinderische Bedeutung und lässt sich für beliebige Arten von Radbremsen mit einer Rückfahrautomatik einsetzen, wobei die Rückfahrautomatik beliebig ausgebildet sein kann. Je nach konstruktiver Ausgestaltung der Rückfahrautomatik mit Schwenknocke, Schiebebacke, Spannkeil oder dgl. kann die Arretiereinrichtung entsprechend angepasst werden.

In einer besonders bevorzugten Ausführungsform beinhaltet eine Radbremse alle vorgenannten Teilerfindungen mit Abstimmung von Eingriffslänge und Stößelhub, Stellnasenausbildung, Federausbildung und Arretiervorrichtung. In anderen Varianten einer Radbremse können die genannten Teilerfindungen einzeln oder in beliebiger Kombination miteinander eingesetzt werden. Sie können insbesondere an einer Radbremse mit den Oberbegriffsmerkmalen von Anspruch 1 eingesetzt werden.

Die Erfindung betrifft ferner eine Bremsbacke mit einem auf deren Quersteg montierten Endglied eines mehrgliedrigen Lenkergetriebes für eine automatische Nachstelleinrichtung und insbesondere deren Betätigungseinrichtung. Besonders günstig ist hierbei die drehbare Lagerung des Endglieds und dessen Befestigung mit einem Niet an einem Quersteg der Bremsbacke. Dies bietet Funktionssicherheit und Unlösbarkeit der Befestigung im Betrieb. Die Ausbildung des Schwenkhebels als mehrfach gebogenes Blechteil hat Vorteile hinsichtlich Kosten, Fertigungs- und Montageaufwand sowie Verformungsfestigkeit. Ein abgesenkter zentraler Hebelbereich mit der dortigen Nietbefestigung und erhabenen seitlich abstehenden Hebelarmen ist dabei besonders günstig.

Diese Bremsbacke kann bei der beanspruchten Radbremse verwendet werden. Sie hat darüber hinaus eigenständige erfinderische Bedeutung und kann auch bei Radbremsen mit anderen Arten von Nachstelleinrichtungen eingesetzt werden, die an der Abstützseite der Radbremse und ggf. einer dortigen Rückfahrautomatik wirken.

Außerdem betrifft die Erfindung eine besonders vorteilhafte Ausführungsform einer Radbremse mit einem Lenkergetriebe zwischen einer Zuspanneinrichtung und einer hiervon distanzierten, abstützseitigen Nachstelleinrichtung. Der Schwenkhebel des Lenkergetriebes ist als mehrfach abgewinkeltes Blechteil ausgebildet und ist durch einen Niet mit der Bremsbacke und deren Backensteg bzw. Quersteg drehbar verbunden. Dies ist eine besonders einfache sowie kostengünstig herstellbare und montierbare Ausführung, wobei auch eine hohe mechanische Festigkeit und Formstabilität erzielt wird und der Schwenkhebel die Auslöse- und Betätigungsbewegungen sicher überträgt. Durch den Niet wird eine sichere und im Betrieb unlösbare Verbindung geschaffen. Der im Lagerbereich abgesenkte und mit erhabenen Hebelarmen ausgerüstete Schwenkhebel ist außerdem platzsparend und kann die zuspannseitige Rückholfeder übergreifen.

In den Unteransprüchen sind vorteilhafte Ausgestaltungen der Erfindung angegeben.

In einer bevorzugten Ausführung der Radbremse und der Bremsbacke ist das Endglied, insbesondere der Schwenkhebel, des Lenkergetriebes auf dem Quersteg des Belagträgers an dessen Innenrand stehend angeordnet und abgestützt. Das Endglied weist ferner eine quer zum Quersteg verlaufende Lagerachse auf.

Diese Bremsbacke ist bevorzugt die bei Rückwärtsfahrt ablaufende Bremsbacke. Der Quersteg ist bevorzugt an einem Belagträger der Bremsbacke angeordnet und quer zum Bremsbelag ausgerichtet.

Der Auslöser der Betätigungsvorrichtung wird vorteilhafterweise von dem beweglichen Endglied, insbesondere dem Schwenkhebel, des Lenkergetriebes und einem zapfenförmigen Anschlag am Gestell der Zuspanneinrichtung gebildet.

Vorteilhafterweise weist der Schwenkhebel des Lenkergetriebes zwei quer nach unterschiedlichen Richtungen abstehende, nicht fluchtende Hebelarme auf. Außerdem ist es günstig, wenn die Hebelarme des Schwenkhebels an einen Hebelschaft oder an einen zentralen Bereich des Schwenkhebels mit einer dortigen Lageröffnung seitlich anschließen. Besonders vorteilhaft ist die drehbare Befestigung des Endglieds, insbesondere des Schwenkhebels, mittels eines Niets am Quersteg.

In einer Ausgestaltung des Lenkergetriebes ist ein weiteres Lenkerglied als Verbindungsstange zwischen dem Endglied, insbesondere dem Schwenkhebel, und dem Nachstellhebel ausgebildet. Das weitere Lenkerglied kann am einen Ende mit dem einen Hebelarm über einen Anschluss drehbar verbunden, insbesondere in einer Öffnung am Hebelarm eingehängt sein.

Bei einer Ausgestaltung des Nachstellhebels ist die Stellnase am Ende eines Hebelarms des Nachstellhebels angeordnet und mit ihrer Nasenwand zum Nachstellrad hin abgewinkelt. Dieses Hebelarmende kann zudem schräg vom Nachstellrad weg abgebogen sein.

Für die Nachstelleinrichtung ist es vorteilhaft, wenn die Stellnase als Rückdrehsicherung für das Nachstellrad ausgebildet ist. Die Nasenwand der Stellnase kann z.B. im wesentlichen parallel zu der in Nachstell-Drehrichtung benachbarten Zahnflanke des Nachstellrads ausgerichtet sein.

In einer Ausführung der Nachstelleinrichtung überdeckt eine schräg gestellte Nasenwand der Stellnase die in Nachstell-Drehrichtung benachbarte Zahnflanke des Nachstellrads in Eingriffstellung nur bereichsweise.

In einer Ausführung der Nachstelleinrichtung ist der Nachstellhebel an seiner Schwenkachse gegen die Kraft der Stützfeder axial beweglich angeordnet.

Die bevorzugt getrennt angeordnete Rückstellfeder des Nachstellhebels kann am Gehäuse der Rückfahrautomatik abgestützt sein. Sie kann als Torsionsfeder ausgebildet und auf der Schwenkachse des Nachstellhebels angeordnet sein. Alternativ ist eine Ausbildung als Zug- oder Druckfeder und eine ggf. seitlich versetzte Anordnung möglich.

Die Erfindung ist in den Zeichnungen beispielhaft und schematisch dargestellt. Im Einzelnen zeigen:
- Figur 1:: eine perspektivische Ansicht einer Radbremse mit einer Rückfahrautomatik und einer automatischen Nachstelleinrichtung,
- Figur 2:: eine Draufsicht auf die Radbremse von Figur 1,
- Figur 3:: eine abgebrochene und vergrößerte perspektivische Detailansicht der Rückfahrautomatik und der Nachstelleinrichtung von Figur 1 und 2,
- Figur 4 und 5:: eine Seitenansicht und eine Frontansicht der Nachstelleinrichtung und der Rückfahrautomatik gemäß Pfeil IV und V von Figur 3,
- Figur 6 und 7:: eine Draufsicht auf die Rückfahrautomatik und die Nachstelleinrichtung gemäß Figur 2 und 3 in verschiedenen Betriebsstellungen,
- Figur 8:: eine Draufsicht gemäß Figur 7 ohne Nachstellhebel,
- Figur 9:: eine Seitenansicht der Nachstelleinrichtung und der Rückfahrautomatik gemäß Pfeil IX von Figur 7,
- Figur 10 und 11:: perspektivische Ansichten einer Radbremse mit einer Betätigungseinrichtung nebst Lenkergetriebe und einer Arretiereinrichtung bzw. Notentriegelung,
- Figur 12 und 13:: eine perspektivische Ansicht und eine Draufsicht einer Variante der Radbremse mit Rückfahrautomatik und Nachstelleinrichtung,
- Figur 14 und 15:: eine perspektivische Ansicht und eine Draufsicht einer weiteren Variante der Radbremse mit Rückfahrautomatik, Nachstelleinrichtung und Notentriegelung,
- Figur 16:: eine perspektivische Ansicht einer Bremsbacke der Radbremsenvariante mit einem Teil der Nachstelleinrichtung,
- Figur 17:: eine perspektivische Ansicht eines Schwenkhebels der Nachstelleinrichtung,
- Figur 18:: eine perspektivische Ansicht eines Lagerbolzens der Nachstelleinrichtung,
- Figur 19 und 20:: weitere Ansichten der Bremsbacke von Figur 17 und
- Figur 21 und 22:: eine Seitenansicht und eine Draufsicht eines Fahrzeugs mit Radbremsen und Bremseinrichtungen.

Die Erfindung betrifft eine Radbremse (2) und ein Fahrzeug (46) mit einer solchen Radbremse (2) sowie ein Verfahren zum Betrieb einer solchen Radbremse (2). Die Erfindung betrifft auch eine Bremsbacke (12) der Radbremse (2).

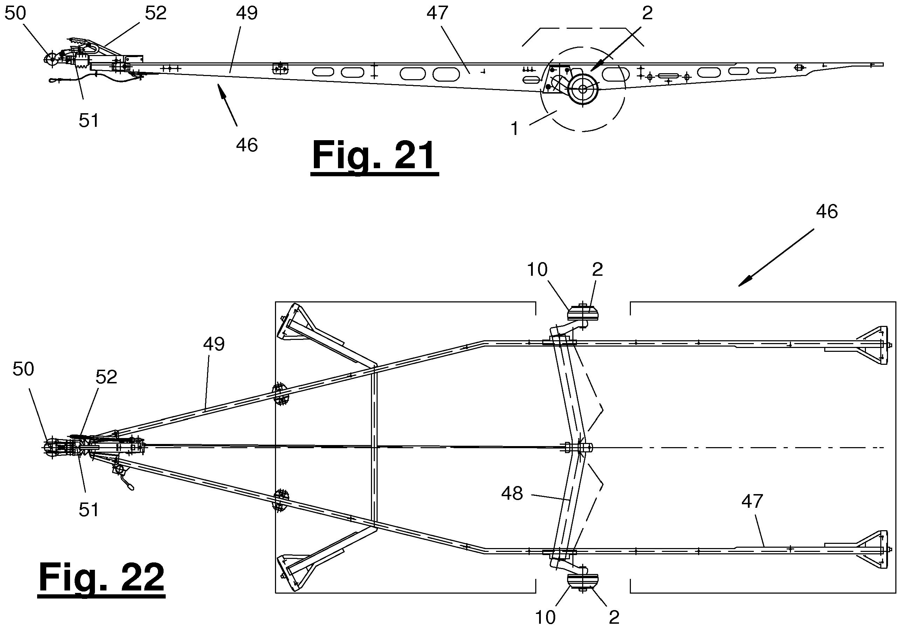

Das Fahrzeug (46) ist z.B. gemäß Figur 21 und 22 als Fahrzeuganhänger mit einem Fahrgestell (47) ausgebildet, welches eine oder mehrere Achsen (48) mit Fahrzeugrädern (1) und eine starre oder bewegliche Zugdeichsel (49) sowie eine Anhängekupplung (50) aufweist. Das Fahrzeug (46) besitzt eine Auflaufbremseinrichtung (51) und eine ggf. mit einem Federspeicher ausgestattete Feststell- oder Handbremseinrichtung (52), die frontseitig an der Zugdeichsel (49) angeordnet sind. Von den Bremseinrichtungen (51,52) werden die Bremskräfte mittels eines Bremszugs, z.B. eines Bremsgestänges und/oder eines Seilzugs oder dgl., auf die Radbremsen (2) an den Fahrzeugrädern (1) übertragen.

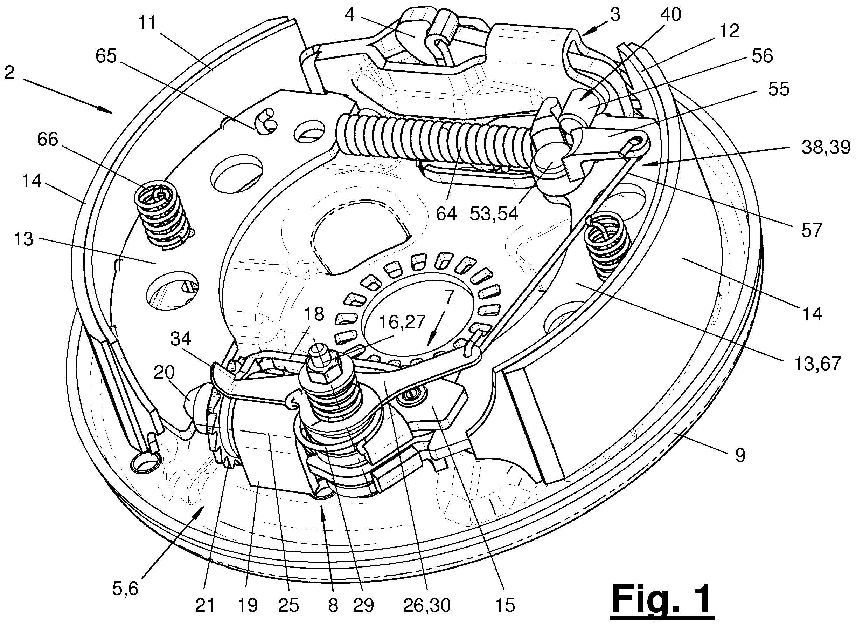

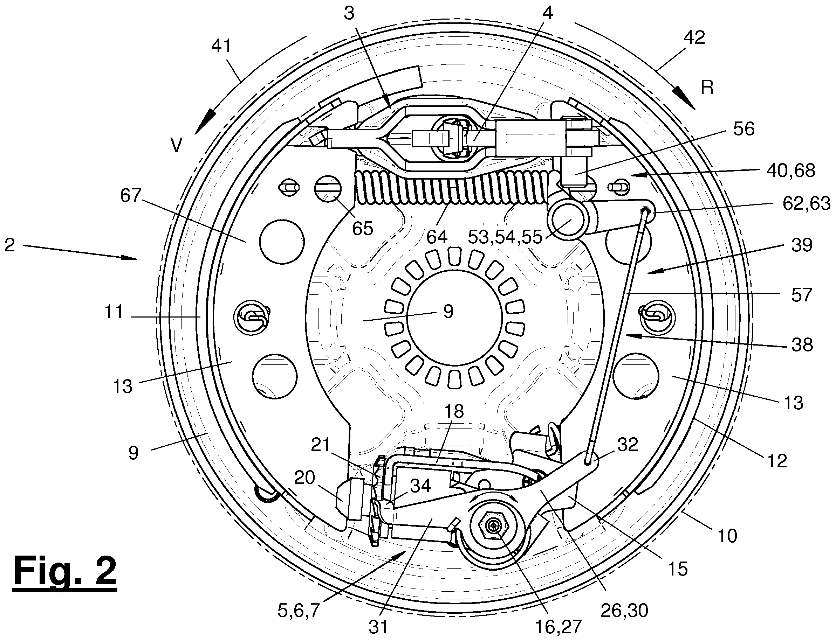

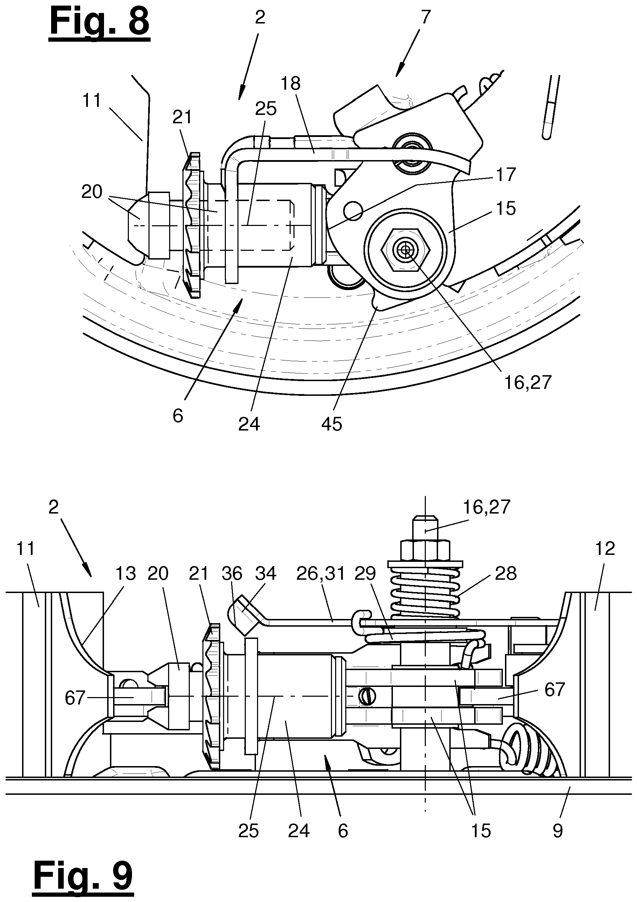

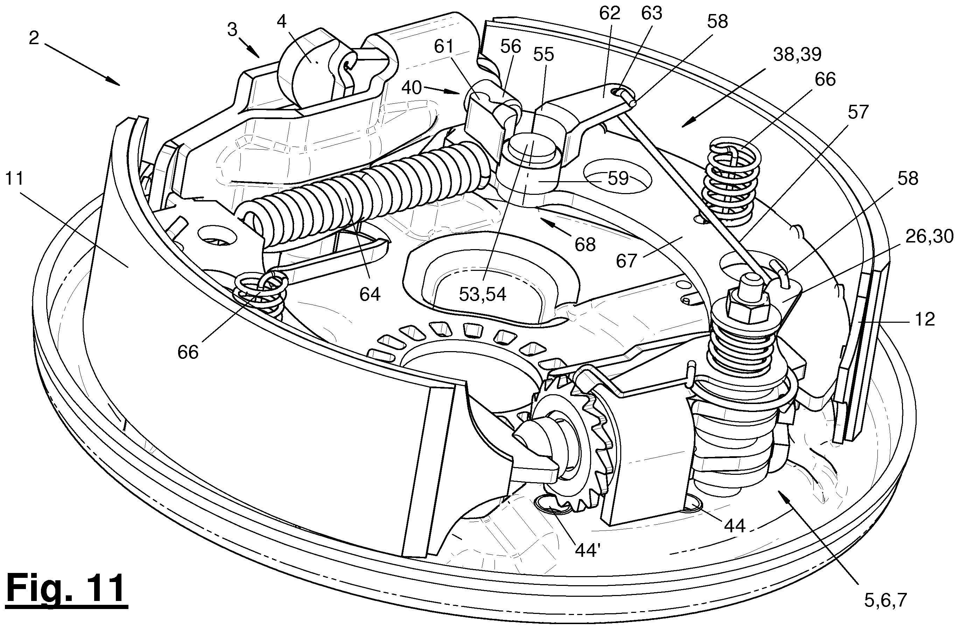

Figur 1 bis 18 zeigen Varianten einer solchen Radbremse (2). Die Radbremse (2) ist z.B. als Trommelbremse ausgebildet und weist in den verschiedenen Ausführungsbeispielen ein Bremsorgan (10), z.B. eine in Figur 22 dargestellte und in Figur 2 angedeutete Bremstrommel (10) auf, an die eine oder mehrere, z.B. die gezeigten zwei inneren Bremsbacken (11,12) angedrückt werden können. Die Bremsbacken (11,12) werden mittels einer schwimmend gelagerten Zuspanneinrichtung (3) unter Einwirkung eines Seilzugs oder eines anderen Betätigungsorgans gegen die Rückstellkraft von einer Bremsfeder (64) gespannt und gegen die Bremstrommel (10) gedrückt sowie auch wieder gelöst. Die Bremsbacken (11,12) sind in der Radbremse (2) zwischen einem rückseitigen Bremsträger (9), z.B. einem Bremsschild, und der Bremstrommel (10) angeordnet. Sie werden durch Haltefedern (66) am Bremsträger (9) in führender Anlage gehalten. Die Bremsfeder (64) wirkt nahe der Zuspanneinrichtung (3) und parallel zu dieser zwischen den Bremsbacken (11,12). An der Bremstrommel (10) wird das Fahrzeugrad (1) in geeigneter Weise befestigt. Die Bremstrommel (10) ist um eine zentrische Achse drehbar am Bremsträger (9) gelagert.

Die Bremsbacken (11,12) werden an der der Zuspanneinrichtung (3) diametral gegenüberliegenden Seite an einer Abstützung (5) abgestützt. Die Bremsbacken (11,12) weisen jeweils einen gebogenen und mit einem Quersteg (67) versehenen Belagträger (13) und mit einem außenseitig auf den Belagträger (13) angeordneten Bremsbelag (14) auf. Die Zuspanneinrichtung (3) und die Abstützung (5) greifen an den Querstegen (67) der Belagträger (13) formschlüssig an.

Die Radbremse (2) besitzt eine Rückfahrautomatik (6) und eine automatische Nachstelleinrichtung (7) zum Nachstellen der Bremswirkung im Fahrbetrieb. Die Nachstelleinrichtung (7) ermöglicht die Kompensation von Bremsenverschleiß, z.B. Verschleiß der Bremsbeläge (14), der Bremstrommel (10) und dgl.. Die Radbremsen (2) können dabei in Ihrer Grundkonstruktion gleich oder ähnlich sein. Sie unterscheiden sich in der Ausbildung und Anordnung der nachfolgend erläuterten Nachstelleinrichtung (7).

Die Nachstelleinrichtung (7) ist in den gezeigten Ausführungsformen an der Abstützung (5) angeordnet. Sie befindet sich dabei vorzugsweise an der Rückfahrautomatik (6). Mit der Nachstelleinrichtung (7) wird die Stützbreite zwischen den Bremsbacken (11,12) vergrößert und dadurch der Brems- bzw. Belagverschleiß kompensiert sowie der Zuspannweg zum Anlegen der Bremsbacken (11,12) an der Bremstrommel (10) konstant gehalten.

Die Nachstelleinrichtung (7) weist einen schwenkbar um eine Achse (27) gelagerten Nachstellhebel (26) und ein damit im Eingriff stehendes Nachstellrad (21) sowie eine Betätigungseinrichtung (38) für den Nachstellhebel (26) auf. Die Betätigungseinrichtung (38) ist bei Vorwärtsfahrt im Bremsbetrieb aktivierbar. Die Betätigungseinrichtung (38) kann andererseits bei Rückwärtsfahrt und/oder bei einer termischen Überbelastung der Radbremse (2) deaktiviert werden und löst dadurch keine Nachstellung aus. Die Nachstelleinrichtung (7) ist ebenfalls bei Rückwärtsfahrt und/oder bei termischer Überbelastung deaktivierbar. Die Betätigungseinrichtung (38) steht mit der Zuspanneinrichtung (3) und/oder mit den Bremsbacken (11,12) in einer Auslöseverbindung. Sie greift dabei deren Bewegungen bei Bremsbetätigung ab. Wenn der Zuspannweg oder der Spreizweg der Bremsbacken (11,12) beim Bremsen in Vorwärtsfahrt durch Bremsverschleiß ein vorgegebenes Maß überschreitet, erfolgt ein Nachstellen.

Die Betätigungseinrichtung (38) weist in den gezeigten Ausführungsbeispielen ein mehrgliedriges Lenkergetriebe (39) auf, dass am einen Ende mit dem Nachstellhebel (26) und am anderen Ende über einen Auslöser (40) mit der Zuspanneinrichtung (3) verbunden ist. Die Zuspanneinrichtung (3) weist ein bewegliches Spreizorgan (4), z.B. einen schwenkbar in einem Gehäuse gelagerten und mit dem Bremszug verbundenen Spreizhebel auf, der die Bremsbacken bei Betätigung auseinander bewegt.

Das Lenkergetriebe (39) ist mit mindestens einem Lager (53) auf der einen Bremsbacke (12) abgestützt und macht deren Bewegungen mit, wobei der Auslöser (40) von einem beweglichen Endglied (55) des Lenkergetriebes (39) und einem zapfenförmigen Anschlag (56) am Gestell der Zuspanneinrichtung (3) gebildet wird. Das Endglied (55) schlägt beim Spreizen der Bremsbacke (12) an dem Zapfen (56) an, wird dadurch gedreht und überträgt durch ein oder mehrere weitere Lenkerglieder (57) die Bewegung auf den Nachstellhebel (26), der dann um seine Schwenkachse (27) gedreht wird.

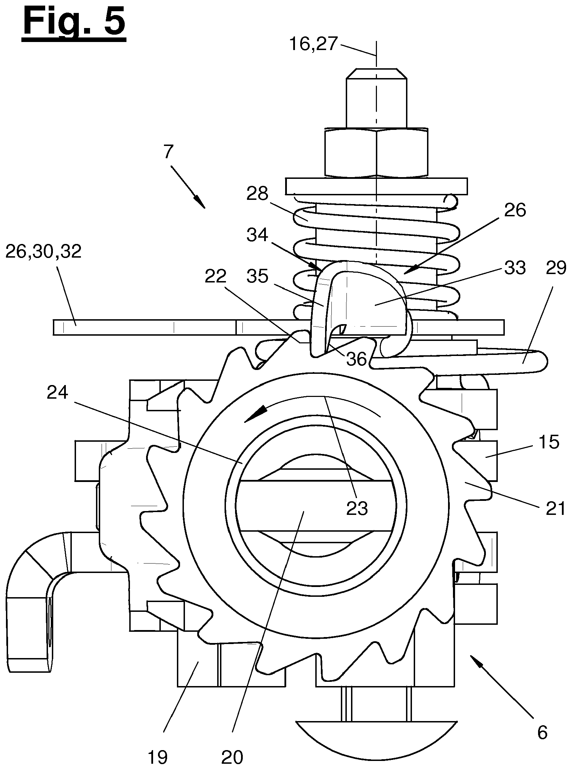

Der Drehweg hängt vom Spreizweg der Zuspanneinrichtung (3) bzw. der Bremsbacken (11,12) ab. Wenn verschleißbedingt der Drehweg ein vorgegebenes Maß überschreitet, nimmt der Nachstellhebel (26) bei Rückkehr in die Ausgangsstellung das Nachstellrad (21) mit und dreht es um einen Teilungsschritt weiter in Drehrichtung (23) (vgl. Figur 5), wodurch die Stützbreite zwischen den anderen Enden der Bremsbacken (11,12) vergrößert wird. Zur Deaktivierung bei Rückwärtsfahrt ist das Lenkergetriebe (39) kollabierfähig, wobei es durch eine Überlagerung von Auslöse- und Backenbewegung einklappt und dadurch den Auslöseweg kompensiert.

Wie Figur 1, 2 und 10 sowie Figur 11 mit der zusätzlichen perspektivischen Ansicht der Radbremse (2) von Figur 1 bis 10 verdeutlichen, ist das Lenkergetriebe (39) mit seinem Endglied (55) am zuspannseitigen Backenende (68) der Bremsbacke (12) angeordnet und abgestützt. Das Endglied (55) ist am Innenrand des Querstegs (67) angeordnet. Es ist auf dem Quersteg oder Backensteg (67) des betreffenden Belagträgers (13) stehend angeordnet und abgestützt, wobei es sich um eine quer zum Backensteg (67) verlaufende Lagerachse (53) drehen kann.

Das Endglied (55) ist als Schwenkhebel ausgebildet und besitzt zwei quer nach unterschiedlichen Richtungen abstehende Hebelarme (61,62). Die Längsachsen der Hebelarme (61,62) fluchten nicht miteinander. Der Schwenkhebel kann einteilig und z.B. als Form- oder Gußteil ausgebildet ein. Er besteht z.B. aus Metall.

Der eine Hebelarm (61) liegt am Anschlag bzw. Zapfen (56) an. Er hat hierfür eine ausreichende Höhe und kann zudem eine Kehlung an der Kontaktstelle zu dem beispielsweise zylindrischen Zapfen (56) aufweisen. Der Hebelarm (61) bewirkt bei einer Spreizung und Auswärtsbewegung der Bremsbacke (12) die erwähnte Drehung des Endglieds bzw. Schwenkhebels (55). Der andere Hebelarm (62) ist mit dem vorerwähnten weiteren Lenkerglied (57) verbunden.

Das weitere Lenkerglied (57) ist in den gezeigten Ausführungsformen als Verbindungsstange ausgebildet, die mit ihren Enden am Schwenkhebel (62) und am Nachstellhebel (26) bzw. dessen Hebelarm (30) in Erfüllung der Lenkerfunktion schwenkbar angeschlossen ist. Der Hebelarm (62) weist hierfür einen z.B. als Durchgangsöffnung ausgebildeten Anschluss (63) zum Einhängen eines umgebogenen Stangenendes (58) auf. Die Verbindung mit dem Nachstellhebel (26) kann auf entsprechende Weise erfolgen. Beide Hebelarme (62,30) sind dabei zum Backensteg (67) hin ausgerichtet und befinden sich oberhalb von diesem, wobei auch die Verbindungsstange (57) mit Abstand oberhalb des Backenstegs (67) angeordnet ist.

Der Schwenkhebel (55) weist einen aufrechten Hebelschaft (59) auf, an den die Hebelarme (61,62) seitlich anschließen. Der Hebelschaft (59) hat außerdem eine interne, durchgehende Lageröffnung (60) für einen Lagerbolzen (54), über den die drehbare Verbindung mit der Bremsbacke (12) und deren Backensteg (67) erfolgt. Am Backensteg (67) ist eine entsprechende Lageröffnung vorhanden. Das Lager (53) weist ferner einen in Figur 1, 2, 10 und 11 dargestellten Lagerbolzen (54) auf. Dieser kann z.B. als Niet ausgeführt oder in anderer Weise am Quer- oder Backensteg (67) fixiert sein.

Die Rückfahrautomatik (6) mindert bei Rückwärtsfahrt des Rads (1) die Bremswirkung oder hebt sie auf, wobei zumindest eine Bremsbacke (11,12) außer Eingriff mit der Bremstrommel (10) gebracht wird. Die Rückfahrautomatik (6) ist in den Ausführungsbeispielen diametral der Zuspanneinrichtung (3) gegenüberliegend angeordnet und befindet sich an der Abstützung (5). In den Ausführungsbeispielen bildet die Rückfahrautomatik (6) selbst die Abstützung (5).

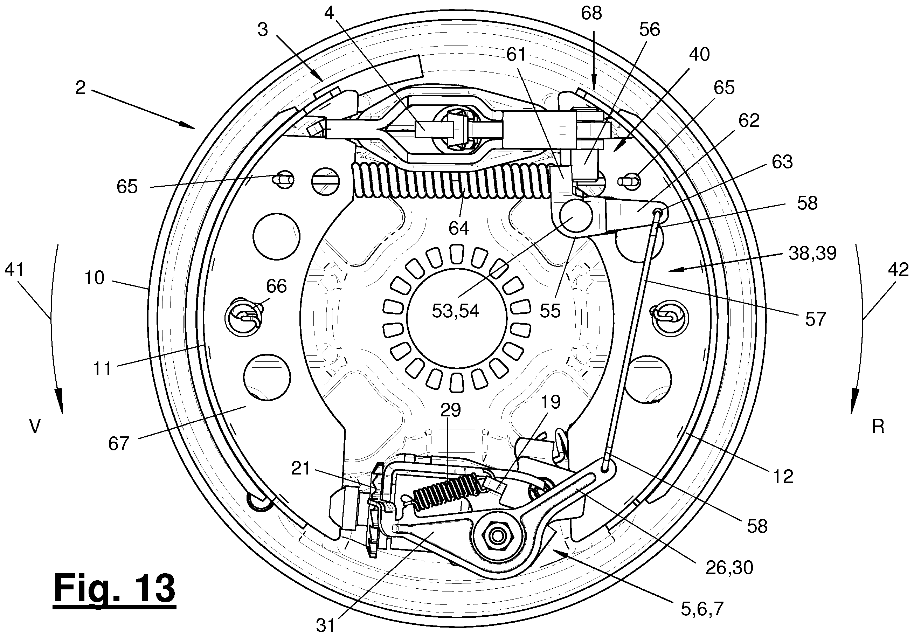

In der Draufsicht von Figur 2 und 13 sind die Drehrichtung (41) gegen den Uhrzeigersinn für die Vorwärtsfahrt (V) und die Drehrichtung (42) im Uhrzeigersinn für die Rückwärtsfahrt (R) angegeben. Beim Bremsen in Vorwärtsdrehrichtung (41) ist die Bremsbacke (11) die auflaufende Backe und die Bremsbacke (12) die ablaufende Backe. Bei Rückwärtsfahrt sind die Verhältnisse umgekehrt, wobei die Bremsbacke (12) die auflaufende Backe ist. Bei Rückwärtsfahrt wird durch die Auflaufeinrichtung (51) die Zuspanneinrichtung (3) betätigt. Die Rückfahrautomatik (6) erlaubt dann an der Seite der Abstützung (5) eine gegenseitige Annäherung der Bremsbackenenden, wodurch die auflaufende Bremsbacke (12) mangels Abstützung keine Bremskraft entwickelt und in Umfangsrichtung mitgenommen wird.

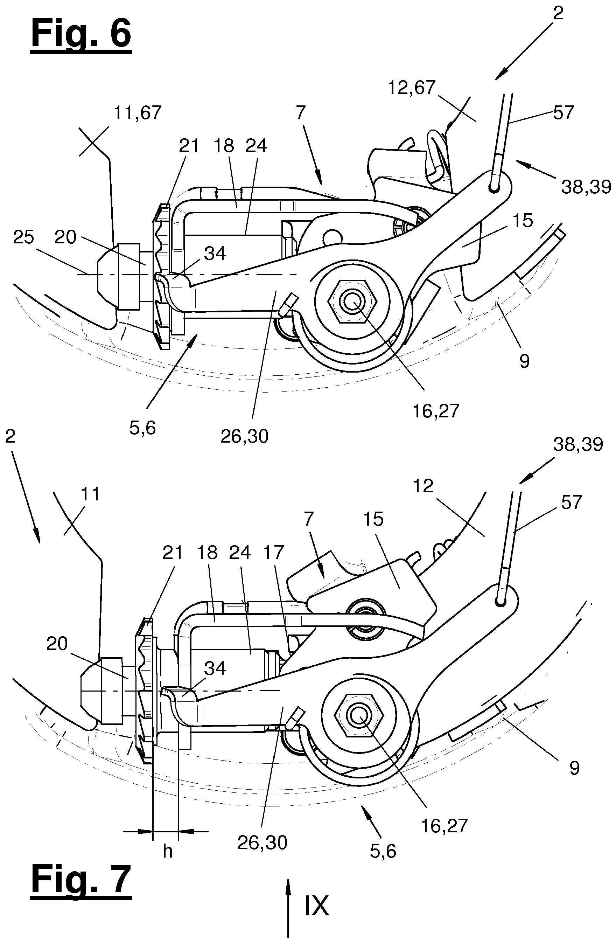

Die gezeigte Rückfahrautomatik (6) weist eine Schwenknocke (15) mit einer Schwenkachse (16) und einen von der Schwenknocke (15) betätigten Stößel (20) auf. Ferner besitzt die Rückfahrautomatik (6) ein mit dem Bremsträger (9) verbundenes, relativ ortsfestes Gehäuse (19) und ein mit der Schwenknocke (15) und dem Stößel (20) verbundenes Stützglied (18). Figur 6 bis 9 zeigen diese Ausbildung ohne das Gehäuse (19).

Die Schwenknocke (15) ist mit der einen bei Rückwärtsfahrt (R) auflaufenden Bremsbacke (12) verbunden und wird von dieser um die ebenfalls relativ ortsfest am Bremsträger (9) angeordnete Schwenkachse (16) bei Rückwärtsfahrt gedreht. Die Schwenknocke (15) weist ferner eine vordere gebogene Nockenkontur (17) auf, mit der sie auf den Stößel (20) einwirkt und diesen bei Rückwärtsfahrt in Richtung seiner zentralen Längsachse (25) bewegt. Der Stößel (20) ist seinerseits mit der anderen Bremsbacke (11) formschlüssig und drehfest verbunden. Er ist andererseits über ein Schraubgewinde mit einer Gewindehülse (24) verbunden, die ihrerseits am Frontende das Nachstellrad (21) trägt und am rückwärtigen Ende an der Nockenkontur (17) anliegt. Der Stößel (20) ist über die umgebende Gewindehülse (24) axial beweglich im Gehäuse (19) geführt. Die Gewindehülse (24) ist mit ihrem zylindrischen Mantel drehbar und verschieblich im Gehäuse (19) gelagert und geführt. Wenn beim Nachstellen das Nachstellrad (21) in Richtung (23) gedreht wird, wird über das Schraubgewinde der Stößel (20) entsprechend längs der Achse (25) nach außen bewegt und vergrößert dadurch die Stützbreite zwischen den Bremsbacken (11,12).

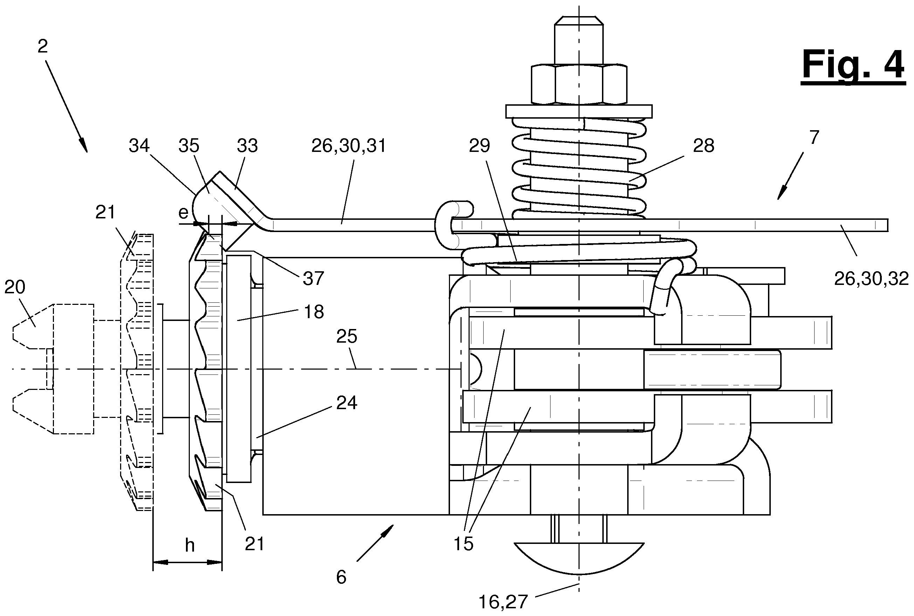

Die Schwenknocke (15) weist durch unterschiedliche Abstände der Kontakt- und Kraftpunkte von Bremsbacke (12) und Stößel (20) bzw. Gewindehülse (24) von der Schwenkachse (16) eine Übersetzung auf und dreht bei Rückwärtsfahrt (R) in Richtung zur anderen Bremsbacke (11), wobei der Stößel (20) und die Gewindehülse (24) mit dem in Figur 4 und 7 gezeigten Stößelhub (h) zusammen mit dem Nachstellrad (21) ausgeschoben werden.

Der Auflaufweg der Auflaufbremseinrichtung (51) ist begrenzt, wobei innerhalb dieses Weges die vom Stößel (20) mitgenommene Bremsbacke (11) keine Abstützung findet und die Radbremse (2) dadurch keine Bremswirkung entfaltet. Durch die Handbremseinrichtung (52) und ggf. einen Federspeicher kann der Zuspannweg darüber hinaus vergrößert werden, wobei auch der Stößelhub (h) noch ein Stück vergrößert wird und die in Umfangsrichtung mitgenommene Bremsbacke (11) dann gegen einen nicht dargestellten Anschlag am Bremsträger (9) anläuft und dort abgestützt wird.

Das Stützglied (18) ist am einen Ende mit der Gewindehülse (24) verbunden und weist am anderen Ende eine Mitnahmeschlitz auf, in den der unter Handbremsbetätigung weiterdrehende Schwenknocken (15) durch eine entsprechende Konturengestaltung eingreift und das Stützglied (18) mitsamt dem Stößel (20) und der Gewindehülse (24) unter Vergrößerung des Stößelhubs (h) bis zum Erreichen der Anschlagsstellung der Bremsbacke (11) weiterschiebt. Mit dem restlichen Zuspannweg könne die dann abgestützten Bremsbacken (11,12) weiter gespreizt und an der Bremstrommel (10) angelegt werden, wodurch eine Bremswirkung in Rückwärtsfahrt (R) möglich wird.

Beim Bremsen in Vorwärtsfahrt (V) drückt die dann auflaufende Bremsbacke (11) den Stößel (20) mit der Gewindehülse (24) gegen die Schwenknocke (15), die dann wegen der höheren Auflaufkraft zur anderen Bremsbacke (12) hindreht und dabei in Anlage an einem nicht dargestellten Anschlag am Bremsträger (9) kommt. Die Schwenknocke (19) bildet dann eine ortsfeste Abstützung für die in Vorwärtsrichtung ablaufende Bremsbacke (12) unter Bildung einer Simplexbremse. Alternativ kann bei Übertragung der Nockenbewegung auf die ablaufende Bremsbacke (12) auch eine Duplexbremse realisiert werden.

Das Nachstellrad (21) ist als Zahnrad ausgebildet und weist am Umfang einen Zahnbesatz auf. Die Zahnform kann in der axialen Seitenansicht symmetrisch oder asymmetrisch sein. In der bevorzugten und gezeigten Ausführungsform ist ein asymmetrisches Sägezahnprofil vorhanden, wobei die Zähne jeweils an ihrer gegen die Drehrichtung (23) gerichteten Zahnflanke (22) eine steilere Flankenneigung als an der anderen Zahnflanke haben. Die steilere Zahnflanke (22) ist z.B. jeweils radial zur zentralen Achse (25) ausgerichtet. An der steileren Zahnflanke (22) greift der Nachstellhebel (26) zum Zwecke der Nachstellung an.

Der Nachstellhebel (26) ist in der gezeigten und bevorzugten Ausführungsform an der Rückfahrautomatik (6) angeordnet und ist mit seiner Schwenkachse (27) parallel oder vorzugsweise fluchtend zur Nockenschwenkachse (16) ausgerichtet. Der Nachstellhebel (26) ist z.B. als flaches Blechteil ausgebildet und weist einen Hebelarm (30) auf, der sich in einen vorderen und zum Nachstellrad (21) sich erstreckenden Armbereich (31) und in einen hinteren und mit der Betätigungseinrichtung (38) verbundenen Armbereich (32) gliedert. Der Hebelarm (30) liegt auf dem Gehäuse (19) oder einer anderen relativ ortsfesten Stützstelle der Rückfahrautomatik (6) auf. Die Schwenkachsen (16,27) sind quer, vorzugsweise senkrecht zur Achse (25) des Nachstellrads (21) ausgerichtet.

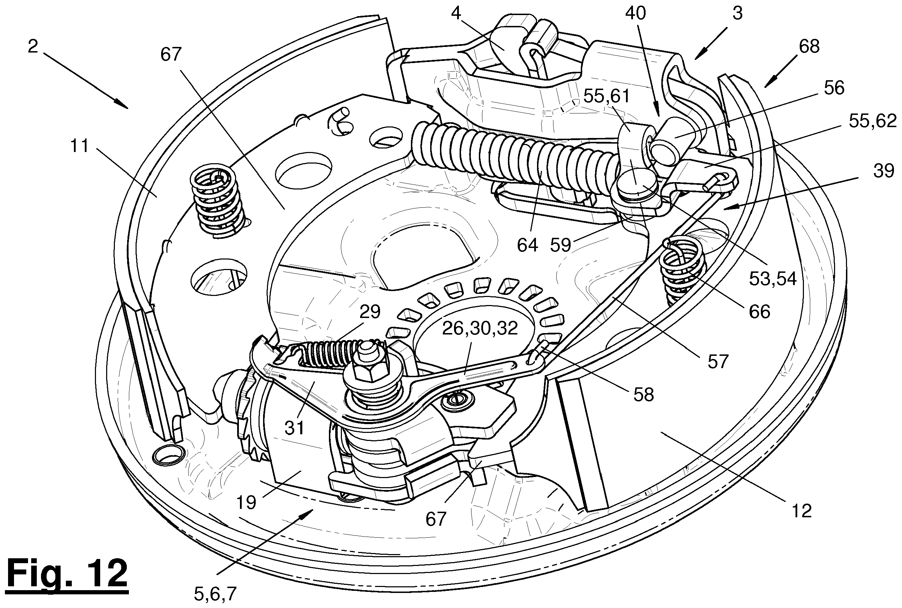

Der Nachstellhebel (26) wird von mehreren Federn (28,29) beaufschlagt. Die eine längs der Schwenkachse (16) wirkende Stützfeder (28) drückt den längs der Achse (16) beweglich geführten Nachstellhebel (26) bzw. Hebelarm (30) nach unten gegen die besagte Stützstelle oder das Gehäuse (19). Die andere Feder (29) dreht den Nachstellhebel (26) bzw. Hebelarm (30) bei Aufhebung der Bremsbetätigung in einer Ausgangslage oder Ruhestellung zurück, die z. B. durch einen Anschlag am Gehäuse (19) definiert sein kann. Die Rückstellfeder (29) kann hierfür z.B. gemäß Figur 1 bis 11 als Torsionsfeder mit Abstützung am Gehäuse (19) ausgebildet sein und umgibt ringförmig die Achsen (16,27). Figur 12 und 13 zeigen eine Variante einer linearen Zugfeder (29), die zwischen einem Anschluss am Gehäuse (19) und dem vorderen Ende (33) des Hebelarms (30) wirkt. Die Federn (28,29) sind getrennt voneinander angeordnet und wirken jeweils eigenständig auf den Nachstellhebel (26) ein.

Der Nachstellhebel (26) bzw. der Hebelarm (30) weist am vorderen Hebelarmende (33) eine Stellnase (34) auf, die mit dem Nachstellrad (21) zusammenwirkt. Die Stellnase (34) weist eine zum Nachstellrad (21) hin abgewinkelte Nasenwand (35) auf, die mit dem Nachstellrad (21) in Eingriff treten kann.

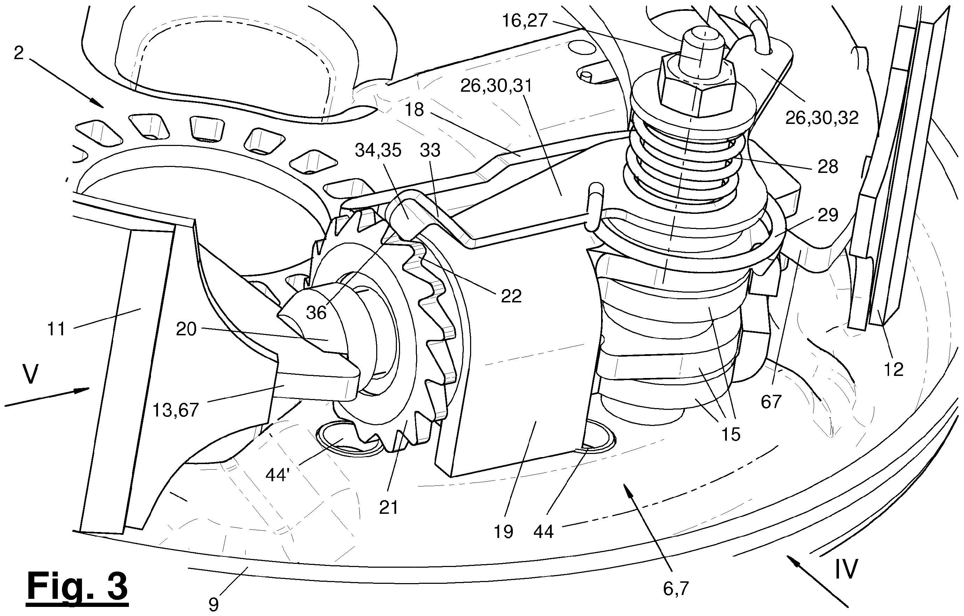

Die Nasenwand (35) hat eine schräg zur gemeinsamen Rad-, Hülsen- und Stößelachse (25) ausgerichtete Vorderkante (36), die am unteren Ende an einer Ecke (37) mündet. Das vordere Hebelarmende (33) ist schräg nach oben und vom Nachstellrad (21) weg abgewinkelt, wodurch die z.B. im Wesentlichen rechteckige Nasenwand (35) und ihre Vorderkante (36) die in Figur 3 und 4 gezeigte Schräglage erhalten. Die schräge Vorderkante (36) steigt dabei von der unteren Ecke (37) in Richtung zur Bremsbacke (11) schräg nach oben an. Der andere Eckbereich kann weich verrundet sein.

Die Stellnase (34) und ihre Nasenwand (35) werden vom Nachstellhebel (26) schwebend in der Zahnlücke des Nachstellrads (21) gehalten. Durch die besagte Schrägausrichtung überdeckt die Nasenwand (35) nur eine Teilfläche oder einen Teilbereich der benachbarte Zahnflanke (22) in der Eingriffstellung und Ruhestellung des Nachstellhebels (26). In der Überdeckung ergibt sich eine in Figur 4 dargestellte Eingriffslänge (e) in Richtung der Achse (25).

Die Nasenwand (35) ist bevorzugt senkrecht vom Hebelarmende (33) abgewinkelt und ist mit ihrer Hauptebene in der besagten Ruhestellung der Nachstelleinrichtung (7) längs der Achse (25) und parallel zur Zahnflanke (22) ausgerichtet. In der Ruhestellung bilden die Stellnase (34) und der in Ruhestellung gehaltene Nachstellhebel (26) eine Rückdrehsicherung für das Nachstellrad (21), welche ein Rückdrehen gegen die Nachstellrichtung (23) verhindert.

Beim Bremsen in Vorwärtsfahrt dreht unter Einwirkung der Betätigungseinrichtung (38) der Nachstellhebel (26) und bewegt die Stellnase (34) gegen die Nachstell-Drehrichtung (23) und über die flachere Zahnflanke des Folgezahns hinweg. Die schräge Vorderkante (36) verhindert bei dieser Drehbewegung weitgehend ein Angleiten an der überstrichenen flacheren Zahnflanke und eine Mitnahme des Nachstellrads (21) entgegen der Nachstell-Drehrichtung (23). Erst am Ende der flacheren Zahnflanke erfolgt ein Kontakt, wobei der Nachstellhebel (26) gegen die Kraft der entsprechend ausgelegten Stützfeder (28) angehoben wird und über das Flankenende hinweg gleitet sowie anschließend unter Federwirkung hinter die nächste steile Zahnflanke (22) schnappt. Bei der anschließenden Rückdrehung des Nachstellhebels (26) in die Ausgangs- oder Ruhestellung wird das Nachstellrad (21) um einen Zahn bzw. einen Teilungsschritt in Drehrichtung (23) weitergedreht.

Bei Rückwärtsfahrt (R) führen der Stößel (20) und die Gewindehülse (24) mit dem Nachstellrad (21) den vorerwähnten Stößelhub (h) aus. Die Eingriffslänge (e) ist dabei so bemessen, dass sie kürzer als dieser Stößelhub (h) bei Rückwärtsfahrt ist. Zu diesem Zweck haben die Stellnase (34) bzw. deren Nasenwand (35) und das Nachstellrad (21) entsprechende Abmessungen in Richtung der Achse (25). Die Längenabstimmung von (e) und (h) haben gemäß Figur 4 und 6 bis 9 zur Folge, dass im Verlauf der Stößelbewegung und des Stößelhubs (h) das Nachstellrad (21) und die Stellnase (34) bzw. Nasenwand (35) außer Eingriff geraten. In Figur 6 und 7 ist im Vergleich die normale und die bei Rückwärtsfahrt gelöste Eingriffsstellung von Nachstellrad (21) und Stellnase (34) gezeigt. Das Gehäuse (19) ist dabei zur besseren Übersicht nicht dargestellt.

Hierbei werden evtl. Toleranzen der Nachstelleinrichtung (7), insbesondere des Nachstellhebels (26), und etwaige Lage- oder Ausrichtungsfehler der Nasenwand (35) gegenüber der Achse (25) kompensiert. Durch die nur bereichsweise Überdeckung der Nasenwand und der Zahnflanke (22) wird der gegenseitige Eingriff relativ frühzeitig gelöst. In der gezeigten Lösestellung kann der Nachstellhebel (26) bzw. seine Stellnase (34) keine toleranz- oder lagebedingten negativen Auswirkungen auf das Nachstellrad (21) haben und kann insbesondere nicht zu einem unerwünschten Verdrehen des Nachstellrads (21) führen. Andererseits ist bei Aufhebung des Stößelhubs (h) und Rückkehr des Nachstellrads (21) in die Ausgangstellung durch die schräge Vorderkante (36) eine Einweiser- und Zentrierfunktion gegeben.

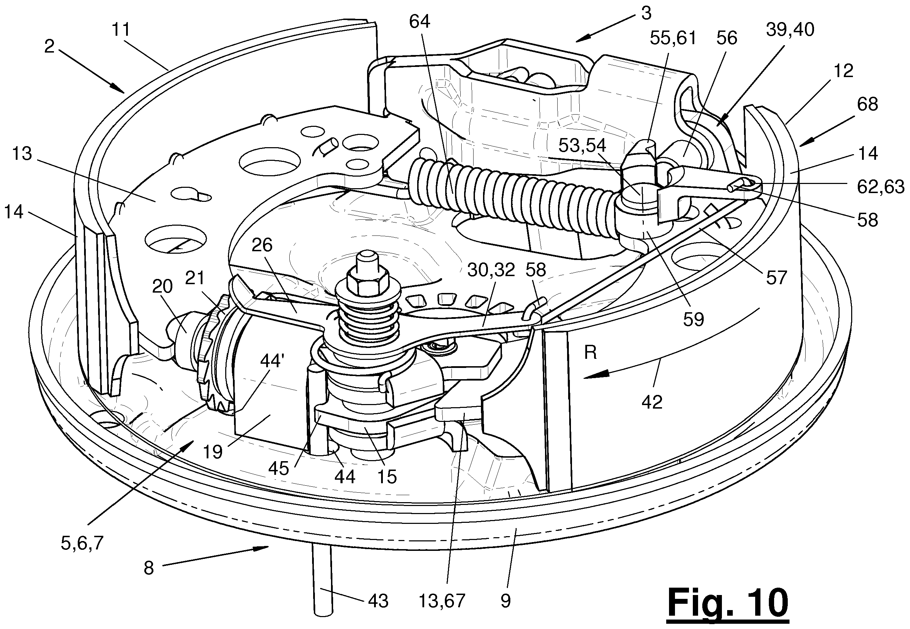

Die Radbremse (2) kann eine in Figur 10 dargestellte Arretiereinrichtung (8) aufweisen. Mit dieser können die Rückfahrautomatik (6) und die damit verbundenen ausweichfähigen Bremsbacken (11,12) in einer ausgewichenen Rückfahrstellung oder in einer Zwischenstellung blockiert werden. In dieser Stellung sind die Bremsbacken (11,12) auch aus einer evtl. durch Verschleiß entstandenen Ringnut an der Bremstrommel (10) herausbewegt. Mit der Arretiereinrichtung (8) kann eine Notentriegelung erfolgen.

Die Arretiereinrichtung (8) weist mehrere zusammenwirkende Arretierelemente (43,44,45) auf. Hierbei sind unterschiedliche konstruktive Ausgestaltungen möglich. In den gezeigten Ausführungsformen ist ein betätigbares und bewegliches Arretierelement (43) als ein in Figur 10 gezeigter Stift ausgebildet, der von außen in die Radbremse (2) eingesteckt und in Eingriff mit den anderen Arretierelementen (44,45) gebracht werden kann. Ein Arretierelement (44) ist z.B. als Durchgangsöffnung im Bremsträger (9) zum Durchstecken des Stiftes (43) ausgebildet. Das andere Arretierelement (45) ist als Arretiernase an einem Teil der Schwenknocke (15) ausgebildet, die bei Anschlag am Stift (43) den Schwenkweg der Schwenknocke (15) begrenzt und diese in der besagten Rückfahrstellung oder einer Zwischenstellung festhält. Die Schwenknocke (15) kann einteilig oder mehrteilig ausgebildet sein. Sie kann in mehrteiliger Ausführung einen in den Ausführungsbeispielen gezeigten mehrlagigen Scheibenaufbau aufweisen, wobei die Arretiernase (45) am Umfang einer Zwischenscheibe angeordnet ist, die sich zwischen den eigentlichen Nockenscheiben mit der Nockenkontur (17) befindet.

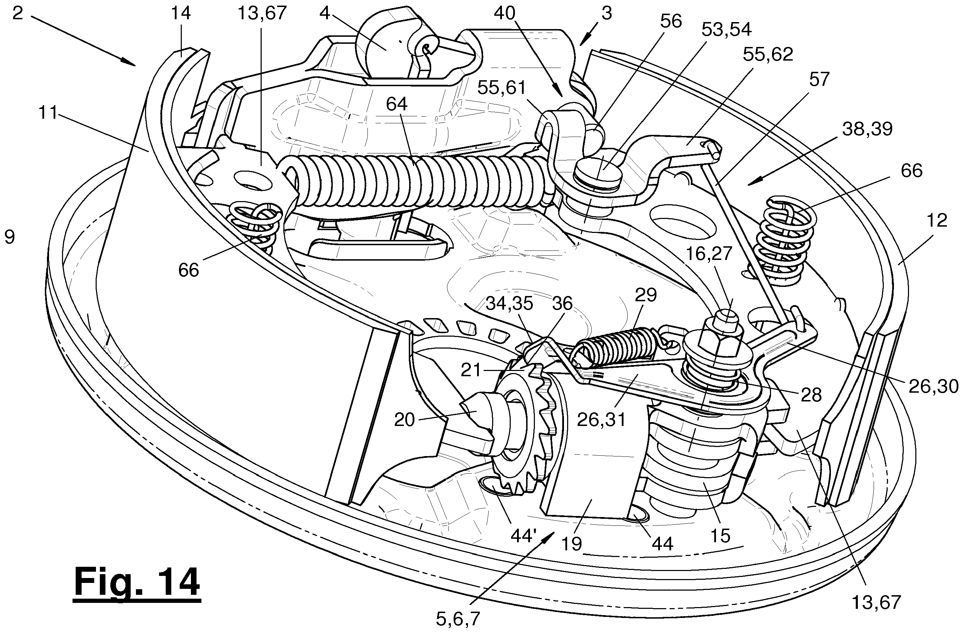

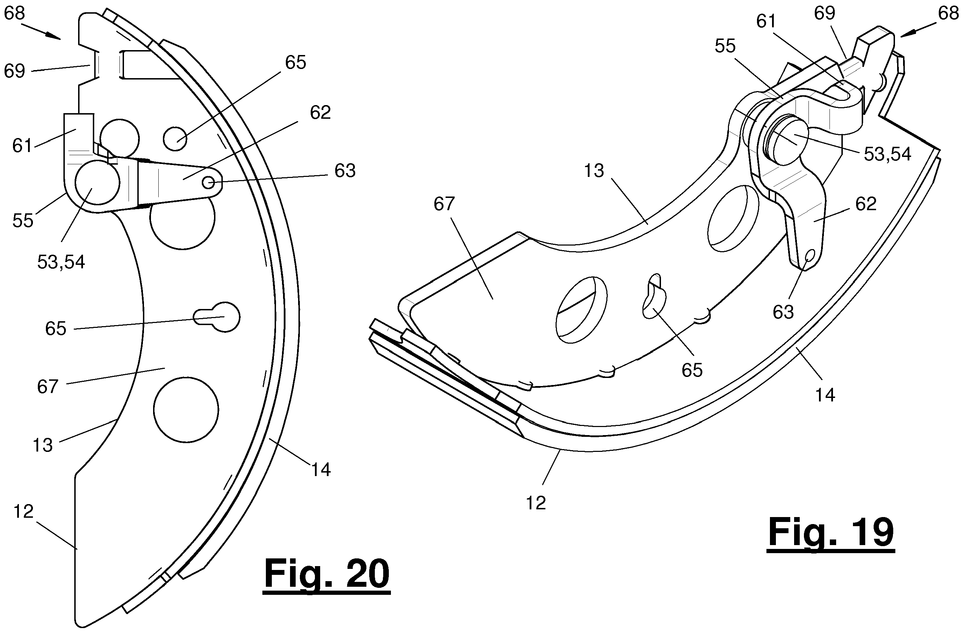

Figur 12 bis 20 zeigen Varianten der Radbremse (2) und ihrer bei Rückwärtsfahrt ablaufenden Bremsbacke (12), die weitgehend mit der Ausführungsform von Figur 1 bis 11 übereinstimmen und sich hiervon vor allem durch die Ausgestaltung der Betätigungseinrichtung (38) und des Lenkergetriebes (39) sowie der vorstehend bereits erwähnten Rückstellfeder (29) und ggf. der Notentriegelung unterscheiden. Figur 14 bis 20 verdeutlichen außerdem im Detail die Ausführung einer Bremsbacke (12) mit Teilen des Lenkergetriebes (39).

Der Schwenkhebel (55) ist wie im ersten Ausführungsbeispiel auf dem Quersteg oder Backensteg (67) des betreffenden Belagträgers (13) stehend angeordnet und abgestützt, wobei es sich um eine quer zum Backensteg (67) verlaufende Lagerachse (53) drehen kann.

Bei der Variante von Figur 12 bis 20 ist das Endglied (55) bzw. der Schwenkhebel anders gestaltet. Er kann z.B. als gebogenes Blechteil aus einem duktilen Metall, insbesondere Stahl, ausgeführt sein. Der zentrale Bereich zwischen den Hebelarmen (61,62) mit der Lageröffnung (60) für den bevorzugt als Niet ausgebildeten Lagerbolzen (54) ist abgesenkt. Er kann einen Lagerschaft (59) aufweisen, der an das Blechteil angeformt ist oder von einer untergelegten Scheibe gebildet wird.

Der seitlich von der Lageröffnung (60) bzw. vom Hebelschaft (59) abstehende und von einem flachen Blechstreifen gebildete Hebelarm (61) ist hierbei mehrfach abgewinkelt. Der erhabene Hebelarm (61) steigt vom zentralen Bereich aus an und übergreift die Bremsfeder (64). Er weist am freien Ende eine Umbiegung auf, die am Zapfen (56) zur Bildung des Auslösers (40) anliegt. Durch die Umbiegung kann der von den Seitenrändern des umgebogenen Blechstreifens gebildete Anlagebereich am Zapfen (56) verbessert und ggf. vergrößert werden. Der Hebelarm (61) erhält außerdem eine höhere Stabilität und Steifigkeit für den Nachstellbetrieb. Andererseits können Herstelleraufwand und Gewicht reduziert werden.

Die Hebelarme (61,62) sind im wesentlichen rechtwinklig zueinander ausgerichtet. Der andere Hebelarm (62) hat ebenfalls eine mehrfach abgewinkelte Form. Er steigt vom zentralen Bereich aus an und hat eine erhabene Form. Der Schwenkhebel (55) erhält hierdurch eine hohe Verformungsfestigkeit, was die Präzision der Nachstellung verbessert. Außerdem spart seine mehrfach abgewinkelte Formgebung mit dem abgesenkten zentralen Bereich Platz und erlaubt die Unterbringung eines Niets (54).

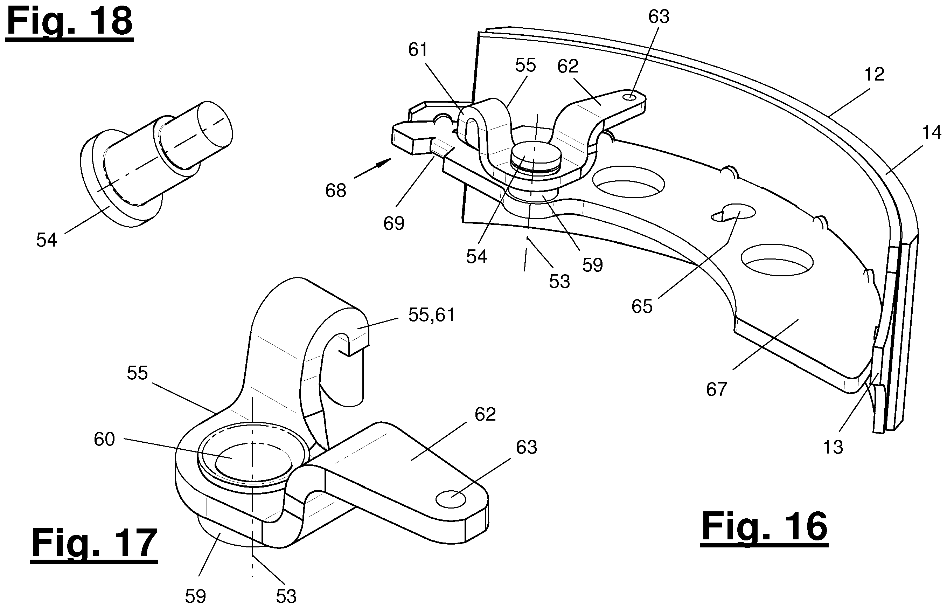

Figur 17 zeigt den Schwenkhebel (55) in einer perspektivischen Darstellung. Der zentrale Hebelbereich bzw. der Hebelschaft (59) weist eine axial durchgehende Lageröffnung (60) für die Bildung des Lagers (53) auf. Der zugehörige und in Figur 18 dargestellte Lagerbolzen (54) hat eine im Durchmesser mehrfach abgestufte Form und besitzt einen verbreiterten Kopf, mit dem er in der Steckstellung in der Lageröffnung (60) an deren oberen Rand aufliegt. Das dünne Bolzenende erstreckt sich durch eine nicht dargestellte Lageröffnung im Quersteg (67) des Belagträgers (13) und kann dort ggf. fixiert werden.

Für die Bolzenbefestigung gibt es unterschiedliche Möglichkeiten. Im gezeigten Ausführungsbeispiel ist der Lagerbolzen (54) als Niet ausgebildet, dessen verbreiteter Nietkopf an der Unterseite des Backenstegs (67) rund um die Lageröffnung anliegt. Der Lagerniet (54) bietet hinreichend Spiel für die vorbeschriebene Drehbewegung des Endglieds (55) bzw. Schwenkhebels.

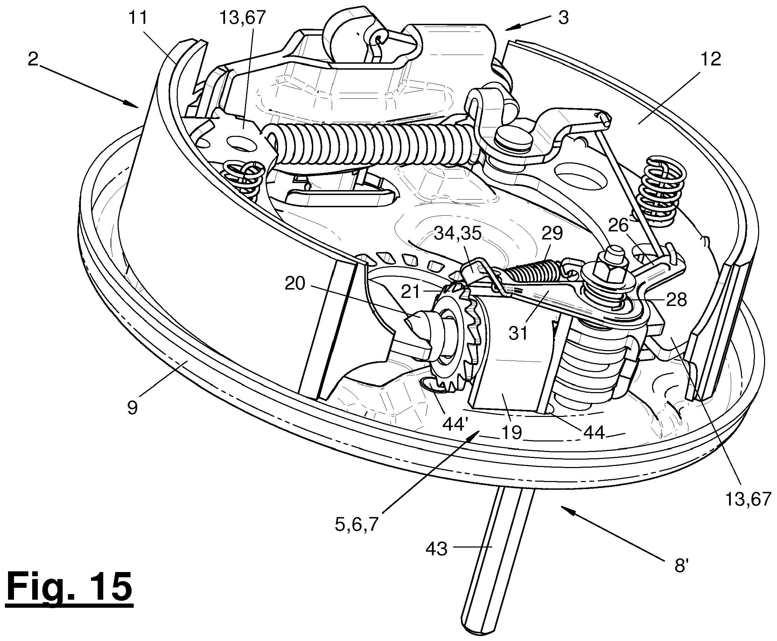

Figur 14 und 15 zeigen eine Radbremse (2) mit einer Variante der Notentriegelung (8'). Die Radbremse (2) kann ansonsten beliebig nach einem der vorbeschriebenen Ausführungsbeispiele ausgebildet sein. Im Bereich der Nachstelleinrichtung (7), bevorzugt auch im Bereich der Rückfahrautomatik (6), sind am Bremsträger (9), insbesondere am Bremsschild, eine oder mehrere Öffnungen (44,44') vorhanden. Die eine Öffnung (44) dient zum Durchstecken eines Löseelements oder Stifts (43) von außen, mit dem der Nachstelleingriff zwischen dem Nachstellhebel (26) und dem Nachstellrad (21) gelöst werden kann. Im gezeigten Ausführungsbeispiel befindet sich die Öffnung (44) im Bereich des Nachstellhebels (26), vorzugsweise im Bereich von dessen vorderem Hebelarm (30). Mit dem durchgesteckten Stift (43) kann der Nachstellhebel (26) gegen die Kraft der Stützfeder (28) angehoben werden, wodurch die Stellnase (34) vom Nachstellrad (21) frei kommt. Der vordere Hebelarm (31) kann für den Stiftkontakt eine verbreiterte Form haben. Die Öffnung (44) befindet sich bevorzugt zwischen der Nachstellachse (27) und dem Gehäuse (19). Im Bereich des freigegebenen Nachstellrads (21) kann eine weitere Öffnung (44') vorhanden sein, durch die das Nachstellrad (21) von außen mit einem geeigneten Werkzeug gedreht werden kann. Hierdurch kann der Abstand zwischen den abstützseitigen Backenenden verringert und eine evtl. festgelaufene Radbremse (2) gelöst werden.

Figur 15, 19 und 20 verdeutlichen die Ausbildung der Bremsbacke (12). Sie bildet zusammen mit dem daran montierten Endglied oder Schwenkhebel (55) ein spezifisches Bauteil für die Radbremse (2) und deren Nachstelleinrichtung (7). Der Schwenkhebel (55) ist am zuspannseitigen Backenende (68) und Innenrand des Querstegs (67) angeordnet. Er ist stehend auf dem Quersteg (67) montiert. Er ist z.B. entsprechend der Ausführungsbeispiele von Figur 12, 13, 14, 15, 17 und 18 ausgebildet und angeordnet.

Diese Bremsbacke (12) hat eigenständige Bedeutung, insbesondere als Nachrüst- und Umbauteil. Auch als Ersatzteil im Schadens- oder Verschleißfall ist sie bedeutsam für die Funktions- und Betriebssicherheit der Radbremse (2) und des damit ausgerüsteten Fahrzeugs (46).

Die in Figur 15, 18 und 20 dargestellte Bremsbacke (12) kann auch mit einem im Detail anders ausgebildeten Endglied oder Schwenkhebel (55), z.B. gemäß der ersten Ausführungsform von Figur 1 bis 11, ausgestattet sein.

Wesentlich ist, dass bei Einbau der Bremsbacke (12) und Anschluss des weiteren Lenkerglieds (57) die Funktionssicherheit der Nachstelleinrichtung (7) und auch der gesamten Radbremse (2) einschließlich der Rückfahrautomatik (6) gewährleistet ist. Die Bremsbacke (12) ist als bei Rückwärtsfahrt (R) ablaufende Bremsbacke (2) ausgebildet und für eine Nachstelleinrichtung (7) vorgesehen, die an der Abstützseite (5) der Radbremse (2) angeordnet ist und einen schwenkbaren Nachstellhebel (26) aufweist. Ansonsten kann die Nachstelleinrichtung (7) den vorbeschriebenen Ausführungsbeispielen entsprechen oder alternativ in anderer Weise ausgebildet sein. Die Bremsbacke (12) ist ferner für eine an der Abstützseite (5) der Radbremse (2) angeordnete Rückfahrautomatik (6) vorgesehen und ausgebildet.

Die Bremsbacke (12) hat weitere bremsenspezifische Adaptionen. Der Quersteg (67) des Belagträgers (13) weist am zuspannseitigen Backenende (68) auch einen Anschluss (65), z.B. eine Durchgangsöffnung, für die Bremsfeder (64) auf. Dieser Anschluss (65) befindet sich in der Nähe des Endglieds (55). Im mittleren Backenstegbereich kann ein weiterer Anschluss (65) für die Haltefeder (66) vorhanden sein. Er kann z.B. als schlüssellochartige Durchgangsöffnung ausgebildet sein.

Am zuspannseitigen Backenende (68) weist der Quersteg (67) an seinem inneren Rand außerdem eine Aufnahme (69) für die definierte und sichere Verbindung mit dem Spreizorgan (4), insbesondere dem Spreizhebel, der Zuspanneinrichtung (3) auf. Die Aufnahme (69) kann z.B. als Nut ausgebildet sein, in die ein gabelförmiges Ende des Spreizorgans (4) eintaucht und hier an den seitlichen Nutenwänden formschlüssig geführt ist.

Abwandlungen der vorbeschriebenen Ausführungsformen sind in verschiedener Weise möglich. Die Merkmale der verschiedenen Ausführungsbeispiele können hierbei beliebig miteinander kombiniert und vertauscht werden.

In einer nicht dargestellten Variante ist es möglich, die Nachstelleinrichtung (7) mit dem Nachstellhebel (26) und dem Nachstellrad (21) an der Zuspanneinrichtung (21) anzuordnen, z.B. analog zur EP 2 116 737 A2, DE 10 2010 036 705 A1 oder DE 10 2006 007 525 A1.

Die Rückfahrautomatik (6) kann in diesem und auch in anderen Fällen beliebig ausgebildet sein. Sie kann gemäß der vorbeschriebenen Ausführungsbeispiele und mit einer Schwenknocke (15) ausgerüstet sein. Sie kann alternativ eine Gleitbacke aufweisen, die bei Rückwärtsfahrt auf einem Backenträger entlanggleitet und ausweicht, wie dies beispielhaft in der EP 0 261 660 A1 oder der DE 20 2006 004 697 U1 dargestellt ist. Eine andere mögliche Variante einer Rückfahrautomatik (6) kann mit einer gleitenden Rolle, einem Schiebekeil oder dgl., z.B. gemäß der DE 24 36 085 B, ausgerüstet sein.

Die Betätigungseinrichtung (38) kann bei den Varianten ebenfalls unterschiedlich ausgebildet sein. Die Betätigung kann gemäß der EP 2 116 737 A2 oder der DE 10 2006 007 525 A1 von der Zuspanneinrichtung (3) ausgelöst werden. Alternativ ist auch eine Auslösung von einer gegenüberliegenden Rückfahrautomatik (6) möglich, wie dies z.B. in der DE 10 2010 036 705 A1 gezeigt ist. Bei den vorgenannten Varianten sind vor allem die Gestaltungen der Stellnase (34) und des Nachstellhebels (26) mit der Federanordnung (28,29) von Vorteil. Auch eine entsprechend der gewählten Rückfahrautomatik gestaltete Arretiereinrichtung (8) ist von Vorteil.

Weitere Varianten sind hinsichtlich der gezeigten Ausführungsbeispiele mit Anordnung der Nachstelleinrichtung (7) an der Rückfahrautomatik (6) möglich. Die Betätigungseinrichtung (38) kann hierfür in anderer Weise gestaltet sein, z.B. als einklappbares bzw. kollabierfähiges Lenkegetriebe, welches mit den Bremsbacken (11,12) verbunden ist und deren gegenseitige Relativbewegung bei Betätigung der Zuspanneinrichtung (3) abgreift. Eine solche Variante kann z.B. gemäß der DE 20 2006 004 697 U1 gestaltet sein. Auch die Anordnung und Lagerung eines Nachstellhebels (26) an einer der Zuspanneinrichtung (3) gegenüberliegenden Rückfahrautomatik (6) kann in anderer Weise erfolgen. Die Nachstelleinrichtung (7) kann ferner ein Thermoelement aufweisen, welches bei übermäßiger Erwärmung der Radbremse (2) über einen Schwellwert ein Nachstellen verhindert. Dies kann z. B. durch ein Lösen des Eingriffs von Stellnase und Nachstellrad mittels eines Bimetall-Elements oder auf andere geeignete Weise erfolgen.

Die vorbeschriebenen Abwandlungen können ebenfalls beliebig miteinander und mit den vorbeschriebenen Ausführungsbeispielen kombiniert werden einschließlich eines Vertauschens oder Weglassens von einzelnen Merkmalen.

### BEZUGSZEICHENLISTE

- 1: Fahrzeugrad
- 2: Radbremse
- 3: Zuspanneinrichtung, Spreizeinrichtung
- 4: Spreizorgan, Spreizhebel
- 5: Abstützung
- 6: Rückfahrautomatik
- 7: Nachstelleinrichtung
- 8: Arretiereinrichtung, Notentriegelung
- 8': Notentriegelung
- 9: Bremsträger, Bremsschild
- 10: Bremsorgan, Bremstrommel
- 11: Bremsbacke, auflaufend
- 12: Bremsbacke, ablaufend
- 13: Belagträger
- 14: Bremsbelag
- 15: Schwenkhebel, Schwenknocke
- 16: Schwenkachse
- 17: Nockenkontur
- 18: Stützglied
- 19: Gehäuse
- 20: Stößel, Gewindestößel
- 21: Nachstellrad, Zahnrad
- 22: Zahnflanke
- 23: Drehrichtung für Nachstellen
- 24: Gewindehülse
- 25: Achse
- 26: Nachstellhebel
- 27: Nachstellachse, Schwenkachse
- 28: Stützfeder
- 29: Rückstellfeder
- 30: Hebelarm
- 31: Hebelarm vorn
- 32: Hebelarm hinten
- 33: Hebelarmende
- 34: Stellnase
- 35: Nasenwand
- 36: Vorderkante
- 37: Ecke
- 38: Betätigungseinrichtung
- 39: Lenkergetriebe
- 40: Auslöser
- 41: Drehrichtung Vorwärtsfahrt
- 42: Drehrichtung Rückwärtsfahrt
- 43: Arretierelement, Stift
- 44: Arretierelement, Öffnung
- 44': Öffnung
- 45: Arretierelement, Arretiernase
- 46: Fahrzeug, Fahrzeuganhänger
- 47: Fahrgestell
- 48: Achse
- 49: Zugdeichsel
- 50: Anhängerkupplung
- 51: Auflaufbremseinrichtung
- 52: Feststellbremseinrichtung, Handbremseinrichtung
- 53: Lager, Lagerachse
- 54: Lagerbolzen, Niet
- 55: Endglied, Schwenkhebel
- 56: Anschlag, Zapfen
- 57: Lenkerglied, Stange
- 58: Stangenende
- 59: Hebelschaft
- 60: Lageröffnung
- 61: Hebelarm
- 62: Hebelarm
- 63: Anschluss, Öffnung
- 64: Bremsfeder
- 65: Anschluss für Feder
- 66: Haltefeder
- 67: Backensteg, Quersteg
- 68: Backenende
- 69: Aufnahme
- h: Stößelhub
- e: Eingriffslänge

## Patentansprüche

1. Radbremse, insbesondere Trommelbremse, mit einer Zuspanneinrichtung (3) und mit Bremsbacken (11,12) sowie mit einer automatischen Nachstelleinrichtung (7), welche einen schwenkbaren Nachstellhebel (26) mit einer Stellnase (34) und ein damit im Eingriff stehendes Nachstellrad (21) aufweist, wobei die Radbremse (2) eine die Bremswirkung bei Rückwärtsfahrt mindernde oder aufhebende Rückfahrautomatik (6) aufweist, welche eine Schwenknocke (15) und einen mit dem Nachstellrad (21) verbundenen, axial beweglichen Stößel (20) aufweist, **dadurch gekennzeichnet, dass** die Eingriffslänge (e) der Stellnase (34) am Nachstellrad (21) kürzer als der Stößelhub (h) bei Rückwärtsfahrt ist.

2. Radbremse nach Anspruch 1, **dadurch gekennzeichnet, dass** die Stellnase (34) eine Nasenwand (35) aufweist, deren Hauptebene in der Ruhestellung der Nachstelleinrichtung (7) entlang der Achse (25) des Nachstellrads (21) und deren zum Nachstellrad (21) gerichtete Vorderkante (36) schräg zu dieser Achse (25) ausgerichtet ist.

3. Radbremse nach Anspruch 1 oder 2, **dadurch gekennzeichnet, dass** der Nachstellhebel (26) eine in Richtung seiner Schwenkachse (27) wirkende Stützfeder (28) und eine separate Rückstellfeder (29) aufweist, die getrennt voneinander angeordnet sind.

4. Radbremse nach Anspruch 1, 2 oder 3, **dadurch gekennzeichnet, dass** die Radbremse (2) eine die Bremswirkung bei Rückwärtsfahrt mindernde oder aufhebende Rückfahrautomatik (6) und eine Notentriegelung (8,8') aufweist.

5. Radbremse nach einem der Ansprüche 1 bis 4, **dadurch gekennzeichnet, dass** der Nachstellhebel (26) und das Nachstellrad (21) an der Zuspanneinrichtung (3) oder an einer dieser gegenüber liegenden Abstützung (5) der Bremsbacken (11,12) angeordnet sind.

6. Radbremse nach einem der vorhergehenden Ansprüche, **dadurch gekennzeichnet, dass** die Nachstelleinrichtung (7) eine bei Vorwärtsfahrt im Bremsbetrieb aktivierbare Betätigungseinrichtung (38) für den Nachstellhebel (26) aufweist und bei Rückwärtsfahrt und/oder bei thermischer Überbelastung deaktivierbar ist.

7. Radbremse nach einem der vorhergehenden Ansprüche, **dadurch gekennzeichnet, dass** die Betätigungseinrichtung (38) mit der Zuspanneinrichtung (3) und/oder mit den Bremsbacken (11,12) in einer Auslöseverbindung steht und ein bei Rückwärtsfahrt kollabierendes Lenkergetriebe (39) aufweist.

8. Radbremse nach einem der vorhergehenden Ansprüche, **dadurch gekennzeichnet, dass** das Lenkergetriebe (39) mit mindestens einem Lager (53) auf der einen Bremsbacke (12) abgestützt ist und deren Bewegung mitmacht.

9. Radbremse nach einem der vorhergehenden Ansprüche, **dadurch gekennzeichnet, dass** das Lenkergetriebe (39) ein bewegliches Endglied (55) aufweist, das als Schwenkhebel ausgebildet ist.

10. Radbremse nach einem der vorhergehenden Ansprüche, **dadurch gekennzeichnet, dass** die Stellnase (34) am Ende (33) eines Hebelarms (30) des Nachstellhebels (26) angeordnet und mit ihrer Nasenwand (35) zum Nachstellrad (21) hin abgewinkelt ist.

11. Radbremse nach einem der vorhergehenden Ansprüche, **dadurch gekennzeichnet, dass** die Stellnase (34) als Rückdrehsicherung für das Nachstellrad (21) ausgebildet ist.

12. Radbremse nach einem der vorhergehenden Ansprüche, **dadurch gekennzeichnet, dass** die Nasenwand (35) im wesentlichen parallel zu der in Nachstell-Drehrichtung (23) benachbarten Zahnflanke (22) ausgerichtet ist und diese in Eingriffstellung nur bereichsweise überdeckt.

13. Radbremse nach einem der vorhergehenden Ansprüche, **dadurch gekennzeichnet, dass** die Rückfahrautomatik (6) ein Gehäuse (19) aufweist, in oder an dem die Schwenknocke (15) und der Stößel (20) mit dem Nachstellrad (21) beweglich gelagert sind, wobei der Nachstellhebel (26) am Gehäuse (19) der Rückfahrautomatik (6) schwenkbar gelagert ist, wobei die Schwenkachsen (16,27) der Schwenknocke (15) und des Nachstellhebels (26) parallel verlaufen, vorzugsweise fluchten.

14. Radbremse nach einem der vorhergehenden Ansprüche, **dadurch gekennzeichnet, dass** die Notentriegelung (8') im Bereich der Nachstelleinrichtung (7) zumindest eine Öffnung (44,44') im Bremsträger (9) zum Durchstecken eines beweglichen Stifts (43) zum Lösen des Eingriffs von Nachstellhebel (26) und Nachstellrad (21), insbesondere zum Anheben des Nachstellhebels (26), und zum Verdrehen des Nachstellrads (21) aufweist.

15. Fahrzeug, insbesondere Fahrzeuganhänger, mit einer Radbremse (2), insbesondere Trommelbremse, mit einer Zuspanneinrichtung (3) und mit Bremsbacken (11,12) sowie mit einer automatischen Nachstelleinrichtung (7), welche einen schwenkbaren Nachstellhebel (26) mit einer Stellnase (34) und ein damit im Eingriff stehendes Nachstellrad (21) aufweist, **dadurch gekennzeichnet, dass** die Radbremse (2) nach mindestens einem der Ansprüche 1 bis 14 ausgebildet ist.

## Claims

1. Wheel brake, in particular drum brake, having a brake application device (3) and having brake shoes (11, 12) and having an automatic adjustment device (7) which has a pivotable adjustment lever (26) having a positioning projection (34) and an adjustment wheel (21) which is engaged therewith, wherein the wheel brake (2) has an automatic reversing unit (6) which reduces or increases the brake action during backward travel and which has a pivot cam (15) and an axially movable tappet (20) which is connected to the adjustment wheel (21), **characterized in that** the engagement length (e) of the positioning projection (34) on the adjustment wheel (21) is shorter than the tappet travel (h) during backward travel.

2. Wheel brake according to Claim 1, **characterized in that** the positioning projection (34) has a projection wall (35) whose main plane is orientated in the rest position of the adjustment device (7) along the axis (25) of the adjustment wheel (21) and whose front edge (36) which is directed toward the adjustment wheel (21) is orientated obliquely relative to this axis (25).

3. Wheel brake according to Claim 1 or Claim 2, **characterized in that** the adjustment lever (26) has a support spring (28) which acts in the direction of the pivot axle (27) thereof and a separate restoring spring (29) which are arranged separately from each other.

4. Wheel brake according to one of Claims 1, 2 or 3, **characterized in that** the wheel brake (2) has an automatic reversing unit (6) which reduces or cancels the brake action during backward travel and an emergency unlocking member (8, 8').

5. Wheel brake according to one of Claims 1 to 4, **characterized in that** the adjustment lever (26) and the adjustment wheel (21) are arranged on the brake application device (3) or on a support (5) of the brake shoes (11, 12), which support (5) is opposite the brake application device (3).

6. Wheel brake according to one of the preceding claims, **characterized in that** the adjustment device (7) has an actuation device (38) which can be activated during forward travel during brake operation for the adjustment lever (26) and can be deactivated during backward travel and/or during a thermal overload.

7. Wheel brake according to one of the preceding claims, **characterized in that** the actuation device (38) is connected in terms of actuation to the brake application device (3) and/or to the brake shoes (11, 12) and has a link mechanism (39) which collapses during backward travel.

8. Wheel brake according to one of the preceding claims, **characterized in that** the link mechanism (39) is supported with at least one bearing (53) on one brake shoe (12) and also carries out the movement thereof.

9. Wheel brake according to one of the preceding claims, **characterized in that** the link mechanism (39) has a movable end member (55) which is in the form of a pivot lever.

10. Wheel brake according to one of the preceding claims, **characterized in that** the positioning projection (34) is arranged at the end (33) of a lever arm (30) of the adjustment lever (26) and is angled with the projection wall (35) thereof toward the adjustment wheel (21).

11. Wheel brake according to one of the preceding claims, **characterized in that** the positioning projection (34) is in the form of a backward rotation prevention member for the adjustment wheel (21).

12. Wheel brake according to one of the preceding claims, **characterized in that** the projection wall (35) is orientated substantially parallel with the tooth flank (22) which is adjacent in the adjustment rotation direction (23) and only partially covers it in the engagement position.

13. Wheel brake according to one of the preceding claims, **characterized in that** the automatic reversing unit (6) has a housing (19), in or on which the pivot cam (15) and the tappet (20) with the adjustment wheel (21) are movably supported, wherein the adjustment lever (26) is pivotably supported on the housing (19) of the automatic reversing unit (6), wherein the pivot axes (16, 27) of the pivot cam (15) and the adjustment lever (26) extend parallel, preferably being in alignment.

14. Wheel brake according to one of the preceding claims, **characterized in that** the emergency unlocking member (8') has in the region of the adjustment device (7) at least one opening (44, 44') in the brake carrier (9) for the introduction of a movable pin (43) in order to release the engagement of the adjustment lever (26) and the adjustment wheel (21), in particular to lift the adjustment lever (26), and to rotate the adjustment wheel (21).

15. Vehicle, in particular a vehicle trailer, having a wheel brake (2), in particular a drum brake, having a brake application device (3) and having brake shoes (11, 12) and having an automatic adjustment device (7) which has a pivotable adjustment lever (26) having a positioning projection (34) and an adjustment wheel (21) which is engaged therewith, **characterized in that** the wheel brake (2) is constructed according to at least one of Claims 1 to 14.

## Revendications

1. Frein de roue, en particulier frein à tambour, comprenant un dispositif de serrage (3) et des mâchoires de frein (11, 12) ainsi qu'un dispositif de rappel automatique (7) qui présente un levier de rappel pivotant (26) avec un ergot de réglage (34) et une roue de rappel (21) en prise avec celui-ci, le frein de roue (2) présentant un automatisme de marche arrière (6) réduisant ou supprimant l'effet de freinage en conduite en marche arrière, qui présente une came pivotante (15) et un poussoir (20) déplaçable axialement, connecté à la roue de rappel (21), **caractérisé en ce que** la longueur d'engagement (e) de l'ergot de réglage (34) au niveau de la roue de rappel (21) est plus courte que la course du poussoir (h) lors de la conduite en marche arrière.

2. Frein de roue selon la revendication 1, **caractérisé en ce que** l'ergot de réglage (34) présente une paroi d'ergot (35) dont le plan principal dans la position de repos du dispositif de rappel (7) est orienté le long de l'axe (25) de la roue de rappel (21) et dont l'arête avant (36) orientée vers la roue de rappel (21) est orientée obliquement par rapport à cet axe (25).

3. Frein de roue selon la revendication 1 ou 2, **caractérisé en ce que** le levier de rappel (26) présente un ressort de support (28) agissant dans la direction de son axe de pivotement (27) et un ressort de rappel séparé (29), lesquels sont disposés séparément l'un de l'autre.

4. Frein de roue selon la revendication 1, 2 ou 3, **caractérisé en ce que** le frein de roue (2) présente un automatisme de marche arrière (6) réduisant ou supprimant l'effet de freinage en conduite en marche arrière et un déverrouillage de secours (8, 8').

5. Frein de roue selon l'une quelconque des revendications 1 à 4, **caractérisé en ce que** le levier de rappel (26) et la roue de rappel (21) sont disposés au niveau du dispositif de serrage (3) ou au niveau d'un support (5) des mâchoires de frein (11, 12) opposé à celui-ci.

6. Frein de roue selon l'une quelconque des revendications précédentes, **caractérisé en ce que** le dispositif de rappel (7) présente un dispositif d'actionnement (38) pour le levier de rappel (26) pouvant être actionné en mode de freinage en conduite en marche avant, et peut être désactivé en conduite en marche arrière et/ou en cas de surcharge thermique.

7. Frein de roue selon l'une quelconque des revendications précédentes, **caractérisé en ce que** le dispositif d'actionnement (38) est en liaison de déclenchement avec le dispositif de serrage (3) et/ou avec les mâchoires de frein (11, 12) et présente une transmission à bras articulés (39) s'effondrant en conduite en marche arrière.

8. Frein de roue selon l'une quelconque des revendications précédentes, **caractérisé en ce que** la transmission à bras articulés (39) est supportée avec au moins un palier (53) sur l'une des mâchoires de frein (12) et participe à son déplacement.

9. Frein de roue selon l'une quelconque des revendications précédentes, **caractérisé en ce que** la transmission à bras articulés (39) présente un organe terminal mobile (55) qui est réalisé sous forme de levier pivotant.

10. Frein de roue selon l'une quelconque des revendications précédentes, **caractérisé en ce que** l'ergot de réglage (34) est disposé à l'extrémité (33) d'un bras de levier (30) du levier de rappel (26) et est coudé avec sa paroi d'ergot (35) vers la roue de rappel (21).

11. Frein de roue selon l'une quelconque des revendications précédentes, **caractérisé en ce que** l'ergot de réglage (34) est réalisé en tant que fixation contre une rotation en arrière de la roue de rappel (21).

12. Frein de roue selon l'une quelconque des revendications précédentes, **caractérisé en ce que** la paroi d'ergot (35) est orientée essentiellement parallèlement au flanc de dent (22) adjacent dans la direction de rotation de rappel (23) et ne recouvre que partiellement celui-ci dans la position d'engagement.

13. Frein de roue selon l'une quelconque des revendications précédentes, **caractérisé en ce que** l'automatisme de marche arrière (6) présente un boîtier (19) dans lequel ou sur lequel sont supportés de manière déplaçable la came pivotante (15) et le poussoir (20) avec la roue de rappel (21), le levier de rappel (26) étant supporté de manière pivotante sur le boîtier (19) de l'automatisme de marche arrière (6), les axes de pivotement (16, 27) de la came pivotante (15) et du levier de rappel (26) s'étendant parallèlement, de préférence étant en alignement.

14. Frein de roue selon l'une quelconque des revendications précédentes, **caractérisé en ce que** le déverrouillage de secours (8') dans la région du dispositif de rappel (7) présente au moins une ouverture (44, 44) dans le support de frein (9) pour permettre le passage d'une goupille mobile (43) pour desserrer l'engagement du levier de rappel (26) et de la roue de rappel (21), en particulier pour soulever le levier de rappel (26), et pour faire tourner la roue de rappel (21).

15. Véhicule, en particuliers remorques de véhicule, comprenant un frein de roue (2), en particulier un frein à tambour comprenant un dispositif de serrage (3) et des mâchoires de frein (11, 12) ainsi qu'un dispositif de rappel automatique (7) qui présente un levier de rappel pivotant (26) avec un ergot de réglage (34) et une roue de rappel (21) en prise avec celui-ci, **caractérisé en ce que** le frein de roue (2) est réalisé selon au moins l'une quelconque des revendications 1 à 14.
